Europäisches Patentamt

European Patent Office

Office européen des brevets

(19)

(11) Veröffentlichungsnummer: **0 171 598**
**A1**

(12) **EUROPÄISCHE PATENTANMELDUNG**

(21) Anmeldenummer: **85108506.8**

(22) Anmeldetag: **09.07.85**

(51) Int. Cl.⁴: **B 29 C 67/22**
C 08 J 9/06
//(B29K23/00, 105:04)

(30) Priorität: **16.08.84 DE 3430108**

(43) Veröffentlichungstag der Anmeldung:
**19.02.86 Patentblatt 86/8**

(84) Benannte Vertragsstaaten:
**AT BE CH DE FR GB IT LI NL SE**

(71) Anmelder: **DYNAMIT NOBEL AKTIENGESELLSCHAFT**
**Postfach 1261**
**D-5210 Troisdorf, Bez. Köln(DE)**

(72) Erfinder: **Fuhrmann, Horst**
**Polcherstrasse 40**
**D-5405 Ochtendung(DE)**

(54) **Verfahren zur Herstellung von geschlossenzellig verschäumten Formkörpern aus vernetzten Polyolefinen.**

(57) Geschlossenzellig verschäumte Formkörper aus vernetztem Polyolefin werden nach einem Verfahren hergestellt, daß die Stufen des Füllens einer verschäumbaren und vernetzbaren Polyolefinzusammensetzung enthaltend, ein Treibmittel und ein Vernetzungsmittel, in eine geschlossene Form umfaßt und Formen eines entsprechend gestalteten verschäumbaren Produktes unter Druck, wobei die Vernetzungsreaktion fortschreitet, ohne daß das Treibmittel sich zersetzt, anschliessendes Erwärmen des entstehenden verschäumbaren vernetzten Produktes bis auf eine Verschäumungstemperatur zwischen einem Paar Metallplatten, wobei das Produkt biaxial innerhalb des zwischen den Metallplatten belassenen Bereiches sich ausdehnen kann und nachfolgendes Erwärmen des so erhaltenen Zwischenproduktes unter Atmosphärendruck, damit sich das Zwischenprodukt in alle Richtungen unter vollständiger Zersetzung des verbliebenen Treibmittels zum vollständig ausgeschäumten Formkörper ausdehnen kann.

EP 0 171 598 A1

Troisdorf, den 14. August 1984
OZ 84046    MG/Bd

DYNAMIT NOBEL AKTIENGESELLSCHAFT
Troisdorf, Bez. Köln

Verfahren zum Herstellen von geschlossenzellig verschäumten Formkörpern aus vernetzten Polyolefinen

Die vorliegende Erfindung bezieht sich auf ein Verfahren zum Herstellen von geschlossenzellig verschäumten Formkörpern auf Basis vernetzter Polyolefine.

Bekannte Verfahren zum Herstellen von geschäumten Formkörpern mit geschlossenen Zellen aus vernetzten Polyolefinen z.B. nach der DE-OS 16 94 130 arbeiten in der Weise, daß in der ersten Stufe aus einer verschäumbaren und vernetzbaren Polyolefinzusammensetzung zunächst die Vernetzungsreaktion des Polyolefins durch Zersetzen eines organischen Peroxyds oder mittels Elektronenstrahlen erzielt wird und danach das Treibmittel zersetzt wird, wobei die Schaumstruktur des vernetzten Polyolefins entsteht. Hierbei wird sowohl in der Vernetzungsstufe als auch in der Schäumstufe ohne äußere Druckanwendung gearbeitet, wobei relativ grobzellige Schaumstoffe mit unregelmäßiger Oberfläche entstehen.

- 2 -

Zum Herstellen gleichmäßiger feinzelliger Schaumstoffe mit geschlossenen Zellen auf Basis vernetzter Polyolefine wird beispielsweise nach der DE-PS 20 38 506 vorgeschlagen, eine schäumbare und vernetzbare Zusammensetzung enthaltend ein Polyolefin, ein Treibmittel und ein Vernetzungsmittel in einem Dreistufenverfahren zu verschäumen. Hierbei wird in der ersten Stufe die verschäumbare und vernetzbare Mischung in einer geschlossenen Form unter erhöhtem Druck bis zum Ablaufen der Vernetzungsreaktion erwärmt, danach wird das Erhitzen unter Beibehaltung des Überdruckes bis in den unteren Bereich der Zersetzungstemperatur des Treibmittels bis zu einer ersten teilweisen Zersetzung des Treibmittels weitergeführt, dann unter Beibehaltung der Temperatur und Erniedrigung des Druckes das Gemisch in einer zweiten Phase teilgeschäumt und danach das teilgeschäumte Produkt nach dem vollständigen Erhitzen auf Zersetzungstemperatur des Treibmittels bei Atmosphärendruck unter vollständiger Zersetzung des Treibmittels aufgeschäumt. Bei diesem Verfahren hat es sich als nachteilig erwiesen, daß das in der ersten Stufe in der geschlossenen Form vernetzte und verschäumte Vorprodukt gegen die Wandungen der geschlossenen Form gepreßt und daran kleben bleibt, wodurch die Entformung erheblich erschwert ist. Aus diesem Grunde werden solche Formen mit einer trapezförmigen Entformungsseite ausgebildet, wobei die obere Seite länger als die untere Seite ist, um das Entfernen des angeschäumten Vorproduktes zu erleichtern. Hierbei weist jedoch das angeschäumte Vorprodukt einen peripherischen Teil mit einer geringeren Dicke auf, welcher in der nachfolgenden Stufe beim Aufschäumen sich kräuselt und zu einem unbrauchbaren Teil wird, und aus diesem Grunde entfernt werden muß. Das bedeutet jedoch einen zusätzlichen Materialabfall, der das Endprodukt verteuert.

- 3 -

Aufgabe der Erfindung ist es, ein Verfahren zur Herstellung von geschlossenzellig verschäumten Formkörpern aus vernetzten Polyolefinen zu schaffen, das eine gleichmäßige feinzellige Zellstruktur mit weniger Arbeitsaufwand und verbesserter Produktivität als die bekannten Verfahren liefert. Das Verfahren soll die notwendige Anzahl von Verfahrensschritten verringern und weniger Abfall, d.h. mehr Ausbeute an brauchbarem Schaum bezogen auf das eingesetzte Material liefern. Weiterhin ist es Ziel der Erfindung, das Verfahren zum Herstellen von geschlossenzelligen Formkörpern aus vernetzten Polyolefinen dahingehend zu verbessern, daß Formkörper mit großer Dicke und einem hohen Verschäumungsgrad produziert werden könnnen. Weitere Merkmale und Vorteile der Erfindung werden in der nachfolgenden Beschreibung erläutert.

Diese Aufgaben werden gemäß der vorliegenden Erfindung mit einem Verfahren erreicht, bei dem,ausgehend von einer schäumbaren und vernetzbaren Zusammensetzung, enthaltend ein Polyolefin-Homopolymer und/oder Copolymer mit einem Treibmittel und einem Vernetzungsmittel, die in eine geschlossene Form eingefüllt wird, das Erhitzen der Zusammensetzung in der geschlossenen Form unter erhöhtem Druck auf eine die Vernetzung des Polyolefins durch Zersetzen des Vernetzungsmittels und Ablaufen der Vernetzungsreaktion bewirkende Temperatur erfolgt, bei der jedoch noch keine Zersetzung des Treibmittels stattfindet,und ein verschäumbares vernetztes Produkt erhalten wird, das danach das verschäumbare vernetzte Produkt entformt und zwischen ein paar Metallplatten eingelegt und auf eine Verschäumungstemperatur erwärmt wird, bei teilweiser Zersetzung des Treibmittels und Expandieren des Produktes innerhalb des durch die Metallplatten abgegrenzten Bereiches und ein vorgeschäumtes Zwischenprodukt mit plattenförmiger Gestalt erhalten wird, danach das vorgeschäumte Zwischenprodukt bei atmosphärischem Druck auf eine mindestens der Verschäumungstemperatur entsprechende Temperatur erwärmt wird, um das restliche Treibmittel zu zersetzen, wobei das Zwischenprodukt in alle Richtungen expandiert und der fertig

- 4 -

verschäumte Formkörper erhalten wird.

Durch das vorgeschlagene Verfahren wird ein Schaumstofformkörper mit einer sehr gleichmäßigen geschlossenen Zellenstruktur erreicht. Die erfindungsgemäßen Verfahrensstufen erhöhen die Produktivität des Verfahrens und erleichtern die Handhabung. Mit dem erfindungsgemäßen Verfahren können Schaumstofformkörper hergestellt werden, die einen Expansionsfaktor vom 20 bis 70-fachen des ursprünglichen Volumens der eingesetzten schäumbaren und vernetzbaren Zusammensetzung aufweisen.

Die Polyolefine, die erfindungsgemäß vorzugsweise verwendet werden, sind Polyethylen mittlerer, niedriger und hoher Dichten, Ethylenvinylacetat-Copolymere, Poly-1,2-butadien, Ethylenpropylen-Copolymere, Ethylenbuten-Copolymere, Copolymere von Ethylen mit bis zu 45 % an Methyl-, Ethyl-, Propyl- oder Butyl-Acrylat oder -Methacrylat, chlorierte Produkte dieser Homopolymeren oder Copolymeren mit einem Chlorgehalt bis zu 60 Gew.-%, Gemische aus 2 oder mehr der genannten Polymeren und Gemische dieser Polymeren mit isotaktischem oder ataktischem Polypropylen.

Die Treibmittel, die erfindungsgemäß bevorzugt verwendbar sind, sind chemische Treibmittel, deren Zersetzungstemperatur höher ist als der Schmelzpunkt der eingesetzten Polyolefine. Beispiele für solche chemischen Treibmittel sind, ohne darauf beschränkt zu sein, Azoverbindungen, wie Azodicarbonamid und Bariumazodicarboxylat, Nitroso-Verbindungen wie Dinitrosopentamethylentetramin und Trinitrosotrimethyltriamin, Hydrazid-Verbindungen wie p,p'-Oxybis(benzolsulfonylhydrazid), Sulfonylsemicarbazid-Verbindungen wie p,p'-Oxybis (benzol-sulfonylsemicarbazid) und Toluol-sulfonylsemicarbazid, usw.. Von diesen Treibmitteln ist das Azodicarbonamid bevorzugt, da es einen hohen Gehalt an Stickstoff aufweist, die Zersetzungsrate und Temperatur leicht angepaßt werden können und handelsüblich erhältlich ist. Das Treibmittel wird üblicherweise in Mengen von 10 bis 25 Gew.-Teilen pro 100 Gew.-Teile Polyolefin eingesetzt, wobei man einen fertig verschäumten Formkörper erhält, der eine Expansionsrate des 20 bis 50-fachen des ursprünglichen Volumens der verschäumbaren und vernetzbaren Zusammensetzung aufweist. Gemäß der vorliegenden Erfindung ist es möglich, die Zersetzungsrate und Temperatur des Treibmittels durch Hinzufügen eines Hilfsschäummittels zu variieren. Beispiele solcher Hilfsschäummittel sind, ohne darauf beschränkt zu sein, Verbindungen welche Harnstoff als Hauptkomponente enthalten, Metalloxyde wie Zinkoxyd und Bleioxyd, Verbindungen, die Salicylsäure, Stearinsäure usw. als Hauptkomponente enthalten, d.h. höhere Fettsäuren, Metallverbindungen von höheren Fettsäuren usw. Das Hilfsschäummittel soll in Übereinstimmung mit dem Schäummittel ausgewählt werden.

Für die Erfindung werden Vernetzungsmittel eingesetzt, die eine niedrigere Zersetzungstemperatur als das eingesetzte Treibmittel in dem Polyolefin aufweisen, so daß bei Erwärmen der Zusammensetzung zuerst die Zersetzung des Vernetzungsmittels und damit die Vernetzungsreaktion ablaufen kann, bevor bei weiterer Erwärmung die Zersetzung des Treibmittels stattfindet. Organische Peroxyde, die sich bei Erhitzen zersetzen, um freie Radikale zu bilden, welche eine intermolekulare oder intramolekulare Vernetzung bewirken können und welche daher mit Vorteil als Radikalerzeuger dienen können, erfüllen dieses Erfordernis. Auch muß die Zersetzungstemperatur des Vernetzungsmittels geringer als die des Treibmittels bzw. des Gemisches von Treibmittel und Hilfsschäummittel sein, damit mit Sicherheit in der ersten Stufe die Vernetzungsreaktion in der geschlossenen Form ohne Verschäumungsreaktion ablaufen kann. Beispiele für solche organischen Peroxyde sind, ohne darauf beschränkt zu sein, Dicumylperoxyd, 1,1-Ditertiär-butyl-peroxy-3,3,5-trimethylcyclohexan, 2,5-Dimethyl-2,5-ditertiär-butylperoxyhexan, 2,5-Dimethyl-2,5-ditertiärbutylperoxyhexin, $\alpha,\alpha$ -Ditertiär-butylperoxydiisopropylbenzol, Tertiärbutylperoxyketon, Tertiärbutylperoxybenzoat usw.. Es sollten diejenigen Peroxyde ausgewählt werden, die dem jeweiligen Polyolefintyp am besten angepaßt sind.

- 6 -

Das Vernetzungsmittel wird bevorzugt in Mengen von 0,3 bis 1,5 Gew.-Teilen, vorzugsweise zwischen 0,5 bis 1,0 Gew.-Teilen bezogen auf 100 Gew.-Teile Polyolefin eingesetzt.

Im Rahmen der vorliegenden Erfindung können, um die Eigenschaften der Zusammensetzung bzw. des Formkörpers zu verbessern und die Kosten zu reduzieren, gewünschtenfalls Additive oder Füllstoffe zugesetzt werden, welche keinen nachteiligen Einfluß auf die Vernetzung des Polyolefins haben, beispielsweise Ruß, Metalloxyde, wie Zinkoxyd, Titanoxyd, Kalziumoxyd, Magnesiumoxyd und Siliciumdioxyd, Carbonate wie Magnesiumcarbonat und Kalziumcarbonat, faserige Füllmaterialien, wie Pulpe, Farbstoffe, Pigmente und solche Additive die üblicherweise mit Kautschuk zusammen verarbeitet werden könnnen.

Die schäumbare und vernetzbare Zusammensetzung wird durch Vermischen und mechanisches Verarbeiten der Bestandteile beispielsweise mittels einer geeigneten und erwärmten Mischwalze, Plastifizierschnecke oder dgl. hergestellt bei erhöhtem Temperaturen bis etwa 120°C.

Nachfolgend werden einige vorteilhafte verschäumbare und vernetzbare Zusammensetzungen gemäß der Erfindungen aufgeführt:

Zusammensetzung A Für geschäumte Formkörper mit einer Expansionsrate vom 30-fachen des ursprünglichen Volumens der verschäumbaren und vernetzbaren Zusammensetzung wird ein Gemisch aus:

100 Gew.-Teile Polyethylen niedriger Dichte
14-17  "  "  Azodicarbonamid
0- 0,4  "  Zinkoxyd oder aktiviertes Zinkoxyd oder
0 - 0,6 Gew.-Teile Zinkstearat,
0,5-0,8  "  Dicumylperoxyd

durch Verkneten hergestellt.

- 7 -

Zusammensetzung B

Für fertig geschäumte Formkörper mit einer Expansionsrate vom 30-fachen des ursprünglichen Volumens der verschäumbaren und vernetzbaren Zusammensetzung kann auch eine Mischung aus

100 Gew.-Teilen Ethylenvinylacetat-Copolymer mit einem Vinylacetatgehalt von 5 bis 20 Gew.-%,

14-17 "      "   Azodicarbonamid

0- 0,4       "   Zinkoxyd oder aktiviertes Zinkoxyd oder
                 0 - 0,6 Gew.-Teile Zinkstearate,

0,5-1,0      "   Dicumylperoxyd

hergestellt werden.

Zusammensetzung C

Für fertig geschäumte Formkörper mit einer Expansionsrate vom 40-fachen des ursprünglichen Volumens der verschäumbaren und vernetzbaren Zusammensetzung wird ein Gemisch hergestellt aus:

100 Gew.-Teilen Polyethylen niedriger Dichte

18-22 "      "   Azodicarbonamid

0- 0,3       "   Zinkoxyd oder aktiviertes Zinkoxyd oder
                 0 - 0,6 Gew.-Teile Zinkstearat,

0,5-1,0      "   Dicumylperoxyd.

Zusammensetzung D

Für fertig geschäumte Formkörper mit einer Expansionsrate vom 40-fachen kann auch eine Mischung hergestellt aus:

100 Gew.-Teilen Ethylenvinylacetat-Copolymer mit einem Vinyl-
            acetatgehalt zwischen 5 bis 20 Gew.-%,

18-22 "      "   Azodicarbonamid

0- 0,3       "   Zinkoxyd oder aktiviertes Zinkoxyd oder
                 0 - 0,6 Gew.-Teile Zinkstearat

0,5-1,2      "   Dicumylperoxyd

verwendet werden.

- 8 -

Nachfolgend wird das Vernetzungs- und Verschäumungs-Verfahren gemäß der Erfindung näher erläutert. In der ersten Verfahrensstufe wird die zu verschäumende und zu vernetzende Zusammensetzung, die in der vorangehend beschriebenen Weise zusammengesetzt sein,kann beispielsweise durch Verkneten auf einer Mischwalze hergestellt und dann in eine geschlossene Form mit der gewünschten Gestalt eingefüllt oder eingepreßt und dann unter Druck erwärmt. Unter Druck bedeutet Anwendung eines Preßdruckes auf die verschäumbare und vernetzbare Zusammensetzung durch eine geeignete Presse, wie z.B. eine Öldruckpresse, von mehr als 10 kg/cm², vorzugsweise im Bereich von 20 bis 200 kg/cm². Bei einem Druck von weniger als 10 kg/cm² erhält man zu grobe und nicht einheitlich verteilte Zellen im Endprodukt. Das Erwärmen erfolgt mit Temperaturen, die ausreichend sind, um das Vernetzungsmittel zu zersetzen, sie können auch höher als die Zersetzungstemperatur des Vernetzungsmittels sein, sie müssen jedoch unterhalb der Zersetzungstemperatur des Treibmittels liegen, so daß noch keine wesentliche Zersetzung des Treibmittels erfolgen kann. Dieser Temperaturbereich liegt normalerweise im Bereich von 20 bis 160°C, vorzugsweise jedoch im Bereich zwischen 135 bis 155°C. Für eine ausreichende Vernetzung in der geschlossenen Form unter Anwendung des Druckes und Erwärmens in einem Bereich von vorzugsweise 135 bis 155°C wird, je nach Größe der Form, eine Behandlungsdauer von 20 bis 60 Min. gewählt. Damit wird in der ersten Stufe ein verschäumbares vernetztes Produkt erhalten, das in seiner äußeren Form der Gestalt der Form entspricht. In dieser ersten Verfahrensstufe soll beim Erwärmen der Gel-Gehalt des verschäumbaren vernetzten Produktes innerhalb des Bereiches von 1 bis 70 % erhalten werden. Geht der Gel-Gehalt über 70 % hinaus, dann kann das verschäumbare vernetzte Produkt in den nachfolgenden Stufen nicht ausreichend expandiert, d.h. verschäumt werden. Ist der Gel-Gehalt jedoch niedriger als 1 %, so sind die Eigenschaften des fertig verschäumten Produktes, insbesondere die Zellstruktur, nicht ausreichend zäh, so daß ein minderwertiges Produkt erhalten wird. Bei unzureichender Ver-

netzung der Zusammensetzung kann nämlich das Treibmittel aufgrund der niedrigen Viskosität des Polyolefins entweichen. Der Begriff Gel-%-Gehalt bedeutet das Verhältnis des Gewichts der Probe nach Extraktion zu dem Gewicht vor Extraktion, wobei die Extraktion unter Rückfluß mit Trichlorethylen als Lösungsmittel innerhalb von 24 Stunden in einer Soxhlet-Apparatur unter Verwendung eines Glasfilters von 40 bis 50 $\mu$ durchgeführt wird. Der Vernetzungsgrad ist proportional der Zunahme des Gel-%-Gehaltes.

In der zweiten Verfahrensstufe wird das verschäumbare und vernetzte Produkt aus der geschlossenen Form, nach dem der aufgebrachte Druck freigegeben wurde, entformt. Das verschäumbare und vernetzte Produkt läßt sich leicht aus der Form entnehmen, da noch kein Verschäumen erfolgt ist und das Produkt nicht durch einen Schäumdruck an die Formwand angepreßt und angeklebt werden konnte. Während der Durchführung der Vernetzungsreaktion in der ersten Verfahrensstufe ist es nicht vermeidbar, daß eine sehr geringfügige Menge Treibmittel zersetzt, die nach der Entnahme des verschäumbaren und vernetzten Produktes aus der Form eine Ausdehnung höchstens auf das zweifache des ursprünglichen Volumens bewirkt. Eine solche für einen Verschäumungsprozeß sehr geringfügiger Expansion wird jedoch im Sinne des Verschäumens nach der vorliegenden Erfindung noch nicht als Verschäumen angesehen. Das aus der Form entnommene verschäumbare vernetzte Produkt wird so gelassen wie es ist, Entformungshilfsteile, die entfernt werden müßten, sind nicht vorhanden. Das verschäumbare vernetzte Produkt wird anschließend zwischen ein Paar Metallplatten, die auf Verschäumungstemperatur temperiert werden, eingelegt und erwärmt, so daß das Treibmittel, das im Produkt enthalten ist, teilweise zersetzt wird. Hierbei dehnt sich das Produkt biaxial in der Ebene, die als Zwischenraum zwischen den beiden Metallplatten begrenzt ist, aus und man erhält ein vorgeschäumtes Zwischenprodukt von plattenförmiger Gestalt entsprechend dem Zwischenraum zwischen den beiden Metallplatten.

Die Verschäumungstemperatur, die für diese Verfahrensstufe erforderlich ist, hängt von Art und Mischungsverhältnis der eingesetzten Treibmittel ab, wird zwischen 150 und 190°C, vorzugsweise zwischen 160 bis 180°C gewählt, wobei das Verschäumen des Produktes allmählich aufgrund des gleichmäßigen Wärmeübergangs von den erwärmten Metallplatten auf das Produkt erfolgt. Die Behandlungszeit des Produktes in dieser zweiten Verfahrensstufe, insbesondere die Erwärmungs- und Aufschäumungszeit zwischen den Metallplatten wird zwischen 15 und 45 Minuten gewählt, je nach Größe und Zusammensetzung des Produktes. Das in dieser zweiten Verfahrensstufe erhaltene vorgeschäumte Zwischenprodukt ist gegenüber dem ursprünglichen Volumen entsprechend der Menge an in die geschlossene Form eingelegter Zusammensetzung um das 6 bis 10-fache expandiert, wobei die Zersetzung des Treibmittels im Bereich von 15 bis 60 Gew.-% verbleibt.

In der dritten Verfahrensstufe wird das vorgeschäumte Zwischenprodukt aus den beiden Metallplatten entfernt und danach auf eine Temperatur, die mindestens der vorangehend angewendeten Verschäumungstemperatur, vorzugsweise jedoch darüber liegt, insbesondere im Bereich zwischen 160 bis 200°C, erwärmt. Die Behandlungszeit liegt bevorzugt zwischen 20 und 60 Minuten, während dieser Zeit wird das noch in dem vorgeschäumten Zwischenprodukt verbliebene Treibmittel vollständig zersetzt und das Produkt expandiert frei in alle Richtungen zu dem endgültigen fertig verschäumten Formkörper. In dieser dritten Verfahrensstufe wird das Erwärmen und Verschäumen des vorgeschäumten Zwischenproduktes in einer Stickstoffatmosphäre oder in einem Heizmedium, wie beispielsweise Rose's Metall, Wood's-Metall o.dgl. enthaltenden Metallbad, Ölbad, bzw. einem ein oder mehrere Salze wie Natriumnitrat, Kaliumnitrat, Kaliumnitrit o.dgl. enthaltenden Salzbad durchgeführt.

- 11 -

Das vorgeschäumte Zwischenprodukt wird vorzugsweise in eine zu öffnende Form oder einen Metallbehälter gegeben, der nicht luftdicht ist und wird zusammen mit dem Behälter bzw. der Form in dem Heizmedium erhitzt, das bei einer geeigneten Verschäumungstemperatur gehalten wird. Andererseits kann auch die Form bzw. der Behälter an ihrer äußeren Oberfläche mit einer elektrischen Heizeinrichtung oder einem Heizmantel, durch den ein Heizmedium z.B. Dampf, Heizöl, o.dgl. zirkuliert, ausgerüstet sein. Durch die Beheizung der Form bzw. des Behälters wird das eingelegte vorgeschäumte Zwischenprodukt indirekt über die Wandungen erwärmt. Es ist auch möglich, das vorgeschäumte Zwischenprodukt mit einer oder mehreren beheizten Metallplatten abzudecken, die auf- und abbewegbar sind. Nach Erwärmung des Zwischenproduktes für einen vorgegebenen Zeitraum und anschließender Abkühlung erhält man das fertig geschäumte Produkt, d.h. den Formkörper. Die Behandlungszeit d.h. die Erwärmungszeit liegt zwischen 10 bis 50 Minuten. Auf diese Weise wird ein vollständig ausgeschäumter Formkörper mit einer einheitlichen feinen Zellstruktur mit zähen Zellwandungen erhalten, der einen hohen Verschäumungsgrad bis etwa zum 70-fachen des ursprünglichen Volumens aufweist, je nach Menge des zugegebenen Treibmittels. Die Größe der geschlossenen Zellen liegt im Bereich von 20 bis 150 $\mu$, es wird ein Vernetzungsgrad von etwa 75 % erreicht.

Das erfindungsgemäße Verfahren ermöglicht die Herstellung eines geschlossenzelligen feinzelligen und gleichmäßigen Schaumstoffes bei relativ kurzen Arbeitszeiten und Arbeitszyklen mit hoher Produktivität. Vorteilhaft ist, daß in der ersten Verfahrensstufe nur eine Vernetzungsreaktion bei Unterdrückung des Verschäumens stattfindet, die ein leichtes Entformen ermöglicht und daß das Verschäumen in zwei nachfolgenden Schritten einmal in der Beschränkung auf eine biaxiale Ausdehnung und dann in der dreidimensionalen Ausdehnung erfolgt. Erfindungsgemäß ist eine leichte Verfahrensführung, und auch hohe

- 12-

Ausbeute, bei verringerten Abfällen gegeben.

Die nach dem erfindungsgemäßen Verfahren erhaltenen geschlossen-zelligen verschäumten Formkörper aus vernetzten Polyolefinen können vorteilhaft als Polstermaterialien und Wärmeisolierungsmaterial und Beschichtungsmaterial eingesetzt werden.

Die Erfindung wird nachstehend anhand von Ausführungsbeispielen näher erläutert.

Beispiel 1

Eine Zusammensetzung enthaltend Polyethylen niedriger Dichte von 0,920 g/cm$^3$ MFR 1,0, 17 Gew.-Teile Azodicarbonamid auf 100 Gew.-Teile Polyethylen, 0,1 Gew.-Teile Zinkoxyd und 0,6 Gew.-Teile Dicumylperoxyd, ebenfalls jeweils auf 100 Gew.-Teile Polyethylen wurde homogen mittels einer Mischwalze bei 110°C durchgeknetet. Das sich hieraus ergebende Gemisch wurde in eine Form der Größe 750 x 750 x 28 mm in eine Presse, die bei einer Temperatur von 150°C temperiert wurde, eingelegt und bei erhöhtem Druck von 100 kg/cm$^2$ während 40 Minuten erwärmt, um eine ungeschäumte vernetzte Platte zu erhalten. Danach wurde diese ungeschäumte vernetzte Platte aus der Form entnommen. Der Gel-%-Gehalt dieser Platte betrug 42 %. Danach wurde die Platte für 30 Minuten zwischen ein Paar Metallplatten, die 28 mm Abstand voneinander hatten, eingelegt und bei einer Temperatur von 170°C erwärmt. Hierbei wurde das Azodicarbonamid teilweise zersetzt und die Platte expandierte biaxial in dem Zwischenraum der durch die beiden Metallplatten begrenzt wurde. Die erhaltene vorgeschäumte Platte, das sogenannte vorgeschäumte Zwischenprodukt wurde dann aus den Metallplatten entnommen. Diese Zwischenplatte war auf das achtfache des ursprünglichen Volumens expandiert, eine Messung ergab, daß 25 Gew.-% des Azodicarbonamid bereits zersetzt waren. Danach wurde die vorgeschäumte Zwischenplatte in eine Form d.h. in eine offene Form, die nicht luftdicht abgeschlossen war, einer Größe von

- 13 -

2080 x 1060 x 95 mm eingelegt. Die Form war mit einem Heizmantel versehen und wurde während 30 Minuten erwärmt, in dem Dampf durch den Mantel zirkulierte. Die Temperatur betrug hierbei 175°C. Nach Abkühlung wurde die fertig ausgeschäumte Platte aus der Form entnommen, eine Messung ergab, daß das nach dem zweiten Verfahrensschritt verbliebene Azodicarbonamid vollständig zersetzt wurde und das Expansionsverhältnis inzwischen auf das dreißigfache vom ursprünglichen Volumen gestiegen war. Eine Messung des Gel-%-Gehaltes ergab nunmehr 70 %.

Die auf diese Weise hergestellte vollständig ausgeschäumte unvernetzte Platte hatte eine einheitliche feine gleichmäßige Zellstruktur hoher Zähigkeit, die Größe der Zellen betrug ca. 50 $\mu$ bei einer Dicke des Endproduktes von 90 mm und einem Raumgewicht von 0,030 g/cm$^3$. Die gesamte Platte war als Schaumstoff verwendbar, so daß bis zu diesem Zeitpunkt der Herstellung kein Abfall zu berücksichtigen war.

Beispiel 2

Eine Zusammensetzung enthaltend Ethylenvinylacetat-Copolymer mit einem Vinylacetatgehalt von 14 Gew.-% einer Dichte von 0,937 g/cm$^3$, MFR 1,5 und 17 Gew.-Teile Azodicarbonamid und 0,05 Gew.-Teile Zinkoxyd und 0,8 Gew.-Teile Dicumylperoxyd auf je 100 Gew.-Teile Ethylenvinylacetat-Copolymer wurden homogen mittels einer Mischrolle bei 90°C verknetet. Das so erhaltene Gemisch wurde bei erhöhtem Druck in eine Form der Größe 750 x 360 x 28 mm eingefüllt und bei einer Temperatur von 145°C gehalten und bei erhöhtem Druck von 100 kg/cm$^2$ während 40 Minuten erwärmt, um eine ungeschäumte vernetzte Platte zu bilden. Danach wurde die so erhaltene unverschäumte vernetzte Platte aus der Form entnommen. Der gemessene Gel-%-Gehalt dieser Platte betrug 35 %. Anschließend wurde diese Platte, wie im Beispiel 1 beschrieben, zwischen zwei Metallplatten vorgeschäumt und anschließend ausgeschäumt in der gleichen Art und Weise und denselben Bedingungen wie in Beispiel 1 beschrieben. Die Expansionsrate der erhaltenen vorgeschäumten Zwischenplatte betrug das siebenfache vom ursprünglichen Volumen, hierbei waren 20 % des Azodicarbonamids zersetzt worden. Die fertig verschäumte Platte hatte eine Expansionsrate, die dem dreißigfachen des ursprünglichen Volumen entsprach bei einem Gel-%-Gehalt von 75 %. Auch diese Platte hatte eine einheitliche feine zähe geschlossene Zellstruktur, wobei die Größe der Zellen etwa 50 $\mu$ betrug bei einer Dicke von 90 mm der fertig ausgeschäumten Platte und einem Raumgewicht von 0,030 g/cm$^3$. Auch bei der Herstellung dieser Platte betrug der Nutzeffekt des eingesetzten Materials 100 %.

Troisdorf, den 14. August 1984
OZ 84046 MG/Bd

<u>Patentansprüche</u>

1. Verfahren zum Herstellen von geschlossenzelligen Schaumstoffformkörpern auf Basis vernetzter Polyolefine bei dem eine
schäumbare und vernetzbare Zusammensetzung durch Vermischen
eines Polyolefinhomopolymer und/oder Copolymers mit einem
Treibmittel und einem Vernetzungsmittel hergestellt und in
eine geschlossene Form eingefüllt wird,
g e k e n n z e i c h n e t   d u r c h   die folgendenden
Verfahrensschritte:

Erhitzen der Zusammensetzung in der geschlossenen Form unter
erhöhtem Druck auf eine die Vernetzung des Polyolefins durch
Zersetzen des Vernetzungsmittels und Ablaufen der Vernetzungsreaktion bewirkende Temperatur, bei der jedoch noch keine Zersetzung des Treibmittels stattfindet, und Erhalten eines verschäumbaren vernetzten Produktes,

Entformen des verschäumbaren vernetzten Produktes und Einlegen
desselben zwischen ein Paar Metallplatten und Erwärmen auf
eine Verschäumungstemperatur bei teilweiser Zersetzung des
Treibmittels und Expandierung des Produktes biaxial  innerhalb
des durch die Metallplatten abgegrenzten Bereiches und Erhalten
eines vorgeschäumten Zwischenproduktes mit plattenförmiger
Gestalt,

Erwärmen des vorgeschäumten Zwischenproduktes bei atmosphärischem Druck auf eine mindestens der Verschäumungstemperatur
entsprechenden Temperatur, um das restliche Treibmittel zu
zersetzen, wobei das Zwischenprodukt in alle Richtungen
expandiert, und Erhalten des fertig verschäumten Formkörpers.

2. Verfahren nach Anspruch 1, dadurch gekennzeichnet, daß die Vernetzungsreaktion der verschäumbaren vernetzten Zusammensetzung zum Erhalt eines Gel-Gehaltes im Bereich von 1 bis 70 % aufrechterhalten wird.

3. Verfahren nach Anspruch 1 oder 2, dadurch gekennzeichnet, daß eine Expansionsrate des vorgeschäumten Zwischenproduktes im Bereich vom 6 bis 10-fachen Volumens des verschäumbaren vernetzten Produktes erhalten wird.

4. Verfahren nach einem der Ansprüche 1 bis 3, dadurch gekennzeichnet, daß die Vernetzungsreaktion bei einem Druck im Bereich von 20 bis 200 kg/cm$^2$ und bei einer Temperatur bis maximal 160°C vorzugsweise im Bereich von 135 bis 155°C durchgeführt wird und die Verschäumung in der ersten Phase bei einer Temperatur im Bereich von 160 bis 190°C, vorzugsweise 160 bis 180°C und in der nachfolgend zweiten Phase bei einer Temperatur im Bereich von 160 bis 200°C erfolgt.

## EINSCHLÄGIGE DOKUMENTE

EP 85108506.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 2 654 029</u> (BASF) <br> * Gesamt * <br> -- | 1,4 | B 29 C 67/22 <br> C 08 J 9/06// <br> B 29 K 23:00 <br> B 29 L 105:04 |
| A | <u>DE - A1 - 3 211 697</u> (SANWA KAKO CO.) <br> * Seite 5, Zeilen 5-16 * <br> -- | 1 | |
| A | <u>US - A - 3 651 183</u> (KIROKURO HOSODA) <br> * Gesamt * <br> -- | | |
| A | <u>DE - B - 1 729 845</u> (VOLCREPE) <br> * Gesamt * <br> ---- | | |

RECHERCHIERTE SACHGEBIETE (Int. Cl.4)

B 29 C

C 08 J

Der vorliegende Recherchenbericht wurde für alle Patentansprüche erstellt.

| Recherchenort | Abschlußdatum der Recherche | Prüfer |
|---|---|---|
| WIEN | 22-11-1985 | MAYER |